(19) Europäisches Patentamt
European Patent Office
Office européen des brevets

(11) Publication number: **0 024 914**
**B1**

(12) **EUROPEAN PATENT SPECIFICATION**

(45) Date of publication of patent specification: **27.07.83**

(51) Int. Cl.³: **C 09 D 3/58,** C 08 L 63/02

(21) Application number: **80302947.9**

(22) Date of filing: **26.08.80**

(54) **Two-component resin coating systems and compositions and coating processes using them.**

(30) Priority: **27.08.79 US 69969**

(43) Date of publication of application:
**11.03.81 Bulletin 81/10**

(45) Publication of the grant of the patent:
**27.07.83 Bulletin 83/30**

(84) Designated Contracting States:
**DE FR GB IT NL**

(56) References cited:
**CH - A - 416 092**
**FR - A - 2 231 719**
**US - A - 3 326 894**

(73) Proprietor: **CELANESE CORPORATION**
**1211 Avenue Of The Americas**
**New York New York 10036 (US)**

(72) Inventor: **Shimp, David A.**
**10100 Hwy. 329**
**Prospect Kentucky (US)**
Inventor: **Hicks, Darrell D.**
**3500 Wilderness Trail**
**Jeffersontown Kentucky (US)**
Inventor: **Graver, Richard B.**
**2517 Tophill Road**
**Louisville Kentucky (US)**

(74) Representative: **De Minvielle-Devaux, Ian Benedict Peter et al,**
**CARPMAELS & RANSFORD 43, Bloomsbury Square**
**London WC1A 2RA (GB)**

**EP 0 024 914 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Two-component resin coating systems and compositions and coating processes using them

This invention relates to two-component resin coating systems, to thermosetting curable coating compositions formed therefrom, and to coating processes using them.

Coating compositions based on organic solvent solutions of polyepoxide resins have been used successfully for a number of years. Such compositions have been particularly useful for coating the interior and exterior of food and beverage containers.

Due to increasing problems with air pollution, considerable efforts are being made to convert organic solvent containing coating compositions to water based systems, i.e., coating systems based on solutions, dispersions and emulsions of film forming resins in water. An example of such a coating composition is that described in CH—A—416092, which discloses *inter alia* emulsions and solutions comprising the reaction products of epoxy resins with polyamines in a mixture of an organic solvent and water. One of the problems in the use of such aqueous systems is the inability of the resin to properly wet the substrate and to form a continuous coating. Another problem is the poor resistance properties, e.g., hot water resistance, of the cured coatings. Still other problems are the poor mechanical stability, e.g. in respect of particle settling, freeze-thaw stability and shear sensitivity, and poor chemical stability, e.g., inadequate potlife, of aqueous coating systems.

Due to present and potential world-wide energy shortages, considerable efforts are being made to develop coating compositions which can be baked and cured rapidly at relatively low temperatures, e.g. at 95 to 150°C.

The invention provides a two-component resin coating system which, when the components are mixed, forms a thermosetting curable coating composition wherein the first component (A) as described hereinafter is the continuous phase and the second component (B) is the discontinuous phase. The first component is the solution of (1) an acid salt of a polyamine terminated polyepoxide resin which is the reaction product of (a) a polyepoxide resin represented by the structural formula:

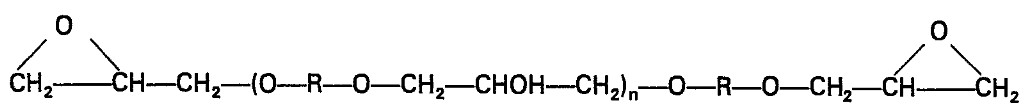

wherein R is a divalent hydrocarbon radical of a dihydric phenol and the average value of n is from 8 to 20 and (b) a polyamine having at least two amine nitrogen atoms per molecule, at least three reactive amine hydrogen atoms per molecule and no other groups reactive with epoxide groups, wherein about one mol of (b) is reacted with each epoxide equivalent of (a). The resulting polyepoxide-amine adduct has an active amine hydrogen equivalent weight of 290 to 1000 and an amine nitrogen equivalent weight of 360 to 1500. This polyepoxide-polyamine adduct (which may be salted with a volatile acid) is dissolved in at least one organic aliphatic hydroxyl containing co-solvent and water. The co-solvent has a solubility parameter polar component from 2.6 to 3.9 $(cal/cm^3)^{1/2}$ and is present in an amount of 5 to 45% by weight based on the weight of the polyepoxide-polyamine adduct and co-solvent. The water is present in an amount sufficient to bring the solids content of the mixture to below 40% by weight, based on the weight of adduct, co-solvent and water.

The second component (which in use is dispersed in the first component in the microemulsified state) is a polyepoxide cross-linker which is a glycidyl polyether of a polyhydric phenol having an epoxide equivalent weight of 150 to 500. Optionally, this second component can be dissolved in the organic aliphatic hydroxy containing cosolvent described hereinbefore. The first component and the second component are present in such amounts that the epoxide group to active amine hydrogen ratio is from 0.25:1 to 1.5:1.

The invention enables several advantages to be achieved notably in that several of the disadvantages mentioned above in connection with the prior art can be avoided. For example, the curable coating composition of the invention has improved mechanical and chemical stability and when applied as a film exhibits improved particle coalescence, film continuity, adhesion, flexibility and chip resistance. The coating composition is capable of being cured with low energy input, that is it can be cured at relatively low temperatures in a relatively short time.

Preferably, R of the recurring structural formula in item (a) is a divalent radical derived from p,p'-dihydroxydiphenyl propane; the polyamine in item (b) is an alkylene polyamine having the formula:

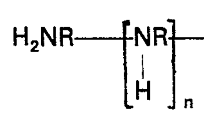

wherein n is 0, 1, 2, 3 or 4 and R is an alkylene group containing 2 to 4 carbon atoms; the organic co-solvent is an alcohol or a glycol ether, or a mixture of any thereof; and the polyepoxide cross-linker is derived from the reaction product of epichlorohydrin and p,p'-dihydroxydiphenyl propane.

In a particularly preferred resin coating system, n of the recurring structural formula in item (a) has an average value of from 8 to 12; the polyamine in item (b) is an ethylene polyamine; the active hydrogen amine equivalent weight of the adduct is from 350 to 650; the amine nitrogen equivalent weight of the adduct is from 475 to 1000; and the co-solvent is t-butanol, n-propanol, n-butanol, ethylene glycol monopropylether, diethylene glycol monobutyl ether, ethylene glycol monobutylether, propylene glycol monopropyl ether or propylene glycol monobutyl ether or a mixture of any of these.

The invention also provides a curable thermosetting coating composition which is an intimate admixture of the components A and B in the form of a composition wherein the epoxy resin cross-linker is present in the microemulsified state, the amount of water in this composition being controlled to achieve a solids contents in this composition of from 5 to 40% by weight based on the weight of the adduct, cross-linker, co-solvent and water.

The invention also provides a process for coating a substrate wherein the curable thermosetting coating composition of the invention is formed into a layer on the surface of the substrate and is then cured. The process is especially applicable to coating metal substrates, especially metal cans.

First component

The polyamine terminated polyepoxide adduct of the first component is the reaction product of a polyamine with a polyepoxide resin.

The polyamines which are reacted with the polyepoxide resins in this invention contain at least 2 amine nitrogen atoms per molecule, at least 3 amine hydrogen atoms per molecule and no other groups which are reactive with epoxide groups. These polyamines can be aliphatic or cycloaliphatic and contain at least 2 carbon atoms per molecule. Preferred polyamines contain up to 6 amine nitrogen atoms, up to 8 amine hydrogen atoms, and up to 20 carbon atoms per molecule. Examples of such amines are the alkylene polyamines, such as ethylene diamine, 1,2-propylene diamine, 1,3-propylene diamine, 1,2-butylene diamine, 1,3-butylene diamine, 1,4-butylene diamine, 1,5-pentalene diamine, 1,6-hexylene diamine, 1,4-diaminocyclohexane, methyl-amino-propylamine, and the like. Preferred amines for use in this invention are alkylene polyamines of the formula:

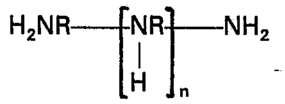

wherein n is 0, 1, 2, 3 or 4 and R is an alkylene group containing 2 to 4 carbon atoms. Examples of such alkylene polyamine are ethylene diamine, diethylene triamine, triethylene tetramine, tetraethylene pentamine, pentaethylene hexamine, dipropylene triamine, tributylene tetramine. Mixtures of amines can also be used. The more preferred amines are the ethylene polyamines with the most preferred being ethylene diamine, diethylene triamine and triethylene tetramine.

The polyepoxide resins useful in preparing the adduct generally include glycidyl polyethers of polyhydric phenols and contain more than one 1,2-epoxide groups per molecule. Such polyepoxide resins may be derived from an epihalohydrin and a dihydric phenol and may normally have an epoxide equivalent weight of 1200 to 3000. Examples of epihalohydrins are epichlorohydrin, epibromohydrin and epiiodohydrin with epichlorohydrin being preferred. Dihydric phenols are exemplified by resorcinol, hydroquinone, p,p-dihydroxydiphenylpropane (or Bisphenol A as it is commonly called), p,p'-dihydroxybenzophenone, p,p'-dihydroxydiphenyl methane, p,p'-dihydroxydiphenylethane, bis(2-hydroxynapthyl) methane, 1,5-dihydroxynaphthylene with Bisphenol A being preferred. These polyepoxide resins are well known in the art and are made in desired molecular weights by reacting the epihalohydrin and the dihydric phenol in various ratios or by reacting a dihydric phenol with a lower molecular weight polyepoxide. The polyepoxide resins can be represented by the general formula:

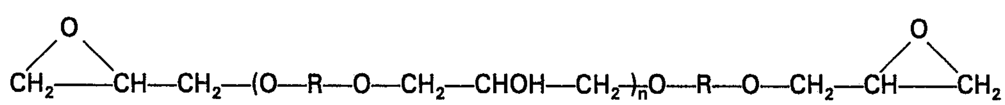

wherein R is a divalent hydrocarbon radical of a dihydric phenol and n is an integer. While for any single molecule of the polyether, n is an integer, the obtained polyether is a mixture of compounds and the determined value for n constitutes an average which is not necessarily a whole number. Thus, the average value of n of the polyepoxide employed to prepare the adduct is not less than 8 and can vary from 8 to 20, and preferably from 8 to 12. If the average value for n is less than 8 the chemical stability (pot life) of the microemulsion which forms upon mixing components A and B is substantially reduced along with the physical and chemical properties of the resulting cured coating prepared therefrom.

The resulting adduct of the polyamine and polyepoxide can be represented by the formula:

B—A—B

wherein A represents a reacted polyepoxide resin and B represents a reacted polyamine. In this formula,

the A—B linkage, which is formed by the reaction of an epoxide group with an amine group, can be represented by the formula:

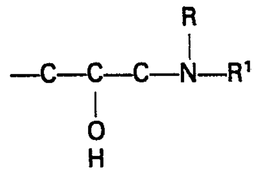

wherein R is an alkylene amine group or hydrogen and $R^1$ is an alkylene amine group.

In preparing the adducts of this invention, the polyepoxide resin and the polyamine are reacted under such conditions that the adduct so formed contains about 1 mole of adduct polyamine molecule for each epoxide equivalent originally present in the polyepoxide resin. In order to achieve this, the polyamine-polyepoxide resin adducting reaction may be carried out using 1 to 10 moles of polyamine for each epoxide equivalent of the polyepoxide resin, and, when the reaction is completed (i.e. when all the epoxide groups have reacted) as much of the excess unreacted polyamine as possible may be removed. The reaction can also be conducted by reacting the primary amine groups of polyalkylene polyamines, e.g., diethylene triamine, with a ketone to form a ketimine, adducting the secondary amine groups with the polyepoxide resin and then hydrolyzing the ketimine groups to the primary amine groups.

The preparation of adducts of polyepoxide resins and polyamines is described in detail in U.S.—A—4,093,594 and 4,116,900. Adduct formation by ketimine reaction is described in U.S.—A—3,947,339. When the adducting reaction is completed, unreacted amine, if any, may be removed by vacuum distillation or by steam sparging under vacuum distillation at temperatures not greater than 205°C. If temperatures in excess of 205°C are employed, the adduct will discolor. Steam sparging should be conducted in a manner sufficient to reduce the presence of unreacted amine in the adduct to an amount not greater than 0.5%, by weight, based on the weight of the adduct. If unreacted amine is present in amounts greater than 0.5%, the pot life of the microemulsion will be reduced substantially and films prepared from the compositions after curing may have poor water resistance.

The amine nitrogen equivalent weight of the polyepoxide-polyamine adduct is controlled to be from 360 to 1500, and most preferably from 475 to 1000.

The amine hydrogen equivalent weight of the polyepoxide-polyamine adduct will vary from 290 to 1000 and preferably from 350 to 650.

The co-solvent mentioned above may be added to the polyepoxide-polyamine adduct after removal of the reaction medium and unreacted amine. The co-solvent is added in an amount sufficient to achieve a concentration of from 5 to 45%, preferably from 25 to 40%, by weight, based on the weight of the adduct and co-solvent. The nature of the co-solvent is further discussed below.

The epoxy-amine adduct is employed in the form of its corresponding acid salt. To achieve this, the adduct may be reacted with acid. Preferably the acid is added after the addition of the co-solvent.

The degree of salting of the epoxy-amine adduct is defined as the number of equivalents of acid reacted with the total number of amine nitrogen equivalents of the epoxy-amine adduct expressed as a percentage of the total number of amine nitrogen equivalents on the adduct. Thus a 100% degree of salting indicates that the epoxy-amine adduct has been reacted with sufficient acid to convert 100% of the amine nitrogen atoms present in the adduct to the corresponding salt.

To convert the epoxy-amine adduct to its corresponding salt for use in the present invention, it is desirable to react the adduct with sufficient acid to achieve a degree of salting of at least 80%, generally from 80% to 300%, preferably from 100 to 300%, and most preferably from 100 to 200%. The effect of salting is to render the epoxy-amine adduct soluble in water or at least water dispersible in a microemulsified state. The use of a high percentage of acid, particularly excess acid, helps to lengthen the pot life of the final composition. However, this benefit of longer pot life is achieved at the sacrifice of room temperature curing capability. Since elevated temperature cures are normally employed in industrial applications, the improvement in pot life is usually more desirable than a room temperature cure. Thus, the pH of the first component A containing the salted epoxy-amine adduct is desirably controlled to be below 7, preferably from 4 to 6, and most preferably from 5 to 6.

The skilled man would have expected the excess acid to react with the epoxide groups of the epoxy cross-linker (component B), thereby reducing the potential of the cross-linker to react with the epoxy-amine adduct. However, it is an unexpected discovery of the present invention that this does not happen in the system described herein.

As described above the epoxy-amine adduct is converted to its corresponding salt by mixing with an acid, which is normally a volatile organic or inorganic acid. The volatile organic acids may be aliphatic, cycloaliphatic, or heterocyclic and may be saturated or unsaturated. Representative examples of volatile organic acids include acetic acid, formic acid, propionic acid, butyric acid, acrylic acid, methacrylic acid, and cyclohexanoic acid. The organic acid will preferably be an aliphatic monocarboxylic acid having up to 3 carbon atoms. Representative examples of water-soluble inorganic acids include hydrochloric acid and hydrobromic acid.

The preferred acid is acetic acid, especially glacial acetic acid.

The epoxy-amine adduct salt and co-solvent are diluted with water to achieve a total solids content of from 15 to 40%, and preferably from 20 to 35% by weight, based on the weight of adduct, co-solvent and water.

Second component

The second component of the two component coating system is a low molecular weight water insoluble polyepoxide crosslinker having more than one terminal epoxide group. Such polyepoxides are the glycidyl polyethers of polyhydric phenols having an epoxide equivalent weight of 150 to 500 and preferably 180 to 250.

These polyepoxide cross-linkers include glycidyl polyethers of dihydric phenols made by reacting a dihydric phenol with an epihalohydrin. Examples of such dihydric phenols are p,p'-dihydroxydiphenyl propane (or Bisphenol A as it is commonly called) p,p'-dihydroxybenzophenone, p,p'-dihydroxydiphenyl methane, p,p'-dihydroxydiphenylethane, bis(2-hydroxynaphthyl)-methane, 1,5-dihydroxynaphthalene and the like. Bisphenol A is the preferred dihydric phenol. The epoxide equivalent weight of these polyepoxide cross-linkers will vary from 170 to 500, and preferably from 180 to 250.

Other suitable polyepoxide cross-linkers are glycidyl polyethers of novolac resins. Novolac resins are phenolic resins obtained by condensing phenol with formaldehyde under acidic conditions and at formaldehyde-phenol molar ratios of 0.5 to 0.8. The corresponding polyepoxides are obtained by reacting an epihalohydrin with the novolac resin. The epoxide equivalent weight of the novolac epoxy resins will vary from 150 to 300 and preferably from 170 to 210.

The epoxy cross-linker is preferably mixed with an appropriate co-solvent as defined herein to reduce its viscosity and prepare it for mixing with the epoxy-amine adduct although the cross-linker may be added directly to the first component if desired.

The co-solvent when added to the cross-linker will typically be present in the second component in an amount which can vary up to 30%, and preferably from 10 to 20%, by weight, based on the weight of co-solvent and epoxy cross-linker.

The co-solvent which is employed in the present invention in either component is herein defined to be an organic aliphatic hydroxyl containing solvent which is characterized as possessing a specifically defined solubility parameter polar component ($\delta_p$) in units of $(cal/cm^3)^{1/2}$ of from 2.6 to 3.9 and preferably from 2.8 to 3.6. The organic aliphatic hydroxyl containing solvent is referred to herein as a co-solvent because it is partially water-soluble and therefore serves as a bridge between the water-soluble phase (i.e., the salted epoxy-amine adduct) and the water insoluble phase (i.e., the epoxy cross-linker) of the coating composition.

The solubility parameter polar component of a solvent is determined from the following equation:

$$\delta_p=\sqrt{\frac{12108}{V_m^2}\cdot\frac{\varepsilon-1}{2\varepsilon+n_D^2}(n_D^2+2)u^2\left[\frac{cal}{cm^3}\right]}$$

wherein

$\varepsilon$=dielectric constant, static value, of the co-solvent;

$n_D$=the index of refraction for the sodium-D line of the co-solvent;

u=dipole moment, Debyes of the co-solvent;

$V_m$=molar volume ($cm^3$) of the co-solvent.

For a further discussion of polar solubility parameters *see* M. Hanze and K. Skaarup; *Independent Calculation of the Parameter Components* 39 Journal of Paint Technology No. 511 (1967).

Thus, any organic aliphatic hydroxyl containing co-solvent having a solubility parameter polar component within the above ranges may be employed in preparing the two component coating system described herein. Typical co-solvents are alcohols and glycol ethers.

In addition to the hydroxyl containing co-solvents minor amounts of other solvent, e.g., other alcohols, glycol ethers, ketones, organic carbonates, aromatic hydrocarbons, cyclic ethers, can be included in a co-solvent blend, providing the polar solubility parameters of the blend meet the aforestated range.

Representative examples of suitable alcohols and their associated polar solubility parameters in $(cal/cm^3)^{1/2}$ include n-propanol (3.3) and n-butanol (2.8).

Representative examples of suitable glycol ethers and their associated polar solubility parameters include ethylene glycol monopropylether (3.6); diethylene glycol monobutyl ether (3.4); and ethylene glycol monobutyl ether (3.1).

In preparing the two component coating composition of the subject invention it is preferred to employ a mixture of co-solvents. Such mixtures should contain (1) a low boiling co-solvent, i.e., b.p. less than 160°C., primarily to lower the surface tension of the coating composition, and (2) a high boiling co-solvent, i.e., b.p. greater than 160°C., primarily to aid in the coalescence of a glossy film.

When the two components described above have been prepared, they may be mixed together with simple stirring. Immediately, upon mixing, the mixture becomes opaque, creamy and viscous.

However, within about two minutes with continuous stirring, the mixture becomes translucent or transparent as a microemulsion forms.

The term microemulsion as employed herein relates to certain colloidal solutions which have the appearance of true solutions but which exhibit the light scattering Tyndall beam effect, and to hazy and cloudy dispersions which exhibit opalescence indicating that at least a portion of the particles have a particle size of less than 0.14 micron. While the invention is not bound by any particular theory, it is believed that the polar portion of the co-solvent is oriented towards the continuous aqueous phase while the non-polar portion of the co-solvent is oriented towards the discontinuous non-polar phase (the epoxy cross-linker) to form micelles. The formation of the micelles is aided by the salted epoxy-amine adduct which functions as a surfactant. The particle size of the epoxy cross-linker as dispersed in the form of an oil-in-water type microemulsion is less than 0.14 micron.

When the two components are mixed, the resultant viscosity is usually greater than that of either component due to microemulsion formation. It is normal practice to thin the mixture with water to the desired viscosity for application. Optionally, co-solvent can be used in conjunction with water for viscosity adjustment.

Thus, the total amount of co-solvent employed in the coating composition after mixture of the two components A and B is desirably controlled to be at least 15% typically from 20 to 45%, and preferably from 25 to 40% by weight, based on the weight of the adduct, cross-linker and co-solvent. If the amount of co-solvent in the original system is insufficient to achieve this, further co-solvent may be added to the mixture.

The solids content of the coating composition obtained by mixing components A and B, after the optional addition of further co-solvent as mentioned in the immediately preceding paragraph, is desirably controlled, by dilution with water if necessary, to be from 5 to 40%, preferably from 20 to 30%, by weight based on the weight of the composition, i.e. the adduct, cross-linker, co-solvent and water.

The amount of epoxy cross-linker which is present in the coating composition is most preferably sufficient to achieve substantially stoichiometric equivalence with the reactive amino hydrogens on the epoxy-amine adduct. In general, it is preferred to employ the epoxy cross-linker in an amount sufficient to achieve an epoxy to reactive adduct amine equivalent weight ratio of from 0.25:1.00 to 1.5:1.0, and preferably from 0.8:1.0 to 1.2:1.0. When employing these amounts of cross-linker the weight ratio of epoxy amine adduct to cross-linker will usually vary from 24:1 to 0.33:1, preferably from 3.5:1 to 1:1, and most preferably from 3.2:1 to 1.5:1.

When components A and B are mixed, the resulting coating composition is generally found to exhibit a pot life at room temperature of from 0.5 to 30 days, typically from 1 to 7 days.

The pot life of the coating composition is defined to be the lapsed time from mixing the components together until the resulting composition is no longer suitable for application by spray or roll coating techniques to a substrate or until the cured coating no longer possesses film continuity, adhesion and blush resistance. The suitability for application by spraying or roll coating techniques can be expressed in terms of the viscosity and the homogeneity of the coating composition. Thus, the pot life can be characterized as the lapsed time from mixing the two components to the time when the viscosity of coating compositions increases above U as determined by the Gardner-Holdt method at 25°C. or develops sediment or stratification. Typically the viscosity of the coating composition will increase until the microemulsion either breaks, in which case the cross-linker settles into a separate layer accompanied by a substantial reduction in viscosity, or until cross-linking reaction takes place accompanied by a substantial increase in viscosity.

The coating composition of the present invention is preferably employed as a can coating. Typical metals from which the cans can be made and to which the coating composition can be applied include tin plated steel, passivated steel and aluminum.

The coating composition can be applied to the metal surface of the can by any spraying technique typically employed in the art.

Alternatively, the coating composition can be applied to a continuous metal sheet, from which the bottoms and tops of the cans are stamped out, by a doctor blade or roller coater.

The curing temperatures of the coating compositions can vary depending on the degree of salting, cure time and coating thickness. Typically, at a degree of salting of from 100 to 200% and a cure time of 0.5 to 8 minutes, the curing temperatures can vary from 65 to 205°C., preferably from 95 to 150°C.

In order to be acceptable as a can coating, the coating composition must withstand certain standard tests such as water (blush) resistance, wet adhesion, degree of cure (solvent resistance) and coating continuity.

The invention is additionally illustrated by the following Examples. The invention is of course not limited to the specific details of the Examples. All parts and percentages in the Examples and in the remainder of the specification are by weight unless otherwise specified.

Example 1

Part A

To a suitable reactor were added 1600 parts of the diglycidyl ether of Bisphenol A having an

epoxide equivalent weight (WPE) of 190. Stirring and heat were applied raising the temperature to 70°C. Bisphenol A, 800 parts, was added followed by the addition of 3.28 parts of triphenyl phosphine. Heating was continued, and when the temperature reached 130°C., the heating source was removed. The exothermic reaction carried the temperature to 160°C. The temperature was maintained at 160°C. until the exothermic reaction was completed. The temperature was then raised to 180°C. and maintained thereat for two hours. The rsulting resinous epoxy resin has an average value of n=10, and had an epoxide equivalent weight of 1560.

Part B
Preparation of epoxy-amine adduct

To a suitable reactor were added 300 parts of the epoxy resin prepared in Part A and 250 parts of toluene. Heating and stirring were applied to dissolve the resin in the solvent. After solution was attained and with the temperature at 70°C., 64 parts of ethylene diamine were added. The temperature was held at 65°—70°C. for one hour, followed by heating to 100°C. and holding at this temperature for one hour. The reactor was then fitted for distillation and heat was applied raising the temperature to 180°C. while distilling solvent and excess ethylene diamine. After the temperature reached 180°C., a vacuum of 28.5 inches of Hg was applied, the temperature was brought back to 180°C. and was held at this temperature for 15 minutes. The vacuum was then released, the heat source was removed and the reactor was fitted with a reflux condenser. The mono-n-propyl ether of propylene glycol, 82.8 parts, by weight, was added to the resulting adduct followed by the addition of 82.8 parts, by weight, of n-butanol and 41.4 parts, by weight, of methylethyl ketone. Stirring was continued until solution was obtained. The calculated molecular weight of the adduct was about 3240, the amine nitrogen equivalent weight was 810 and the amine hydrogen equivalent weight was 540 based on adduct solids. The weight weighted average of the polar solubility parameters of the co-solvents was 3.4 $(cal/cm^3)^{1/2}$.

Part C
Preparation of adduct salt

To a suitable reactor were added 60 parts of the epoxyamine adduct solution described in Part B. 2.46 parts of glacial acetic acid were then added with stirring to achieve a degree of salting of 100% followed by slow addition of 81.54 parts of deionized water. Stirring was continued until solution was attained. The resulting aqueous solution had a solids content of 25%, a Gardner-Holdt viscosity at 25°C of G, and a pH of 5.9.

Part D
Preparation of microemulsion

30 parts of the aqueous solution described in Part C were mixed with 3.1 parts of a solution of the diglycidyl ether of Bisphenol A, having an epoxide equivalent weight of 190, dissolved in the mono-n-butyl ether of ethylene glycol, wherein the weight ratio of epoxide resin to co-solvent is 87:13. The mixture immediately became opaque, creamy and viscous. However, within two minutes with continuous stirring, the mixture became translucent and almost clear. Water, 8.8 parts, was then added. The Gardner-Holdt viscosity within 10 minutes of mixing, at 25°C., was B. After one hour, the viscosity was C, after 4 hours D, and 1 day G, and after 3 days V. The solids content of this mixed and thinned coating composition was 24.3%.

Films were cast from the freshly prepared mixture of Part D on treated aluminum panels using a No. 12 Myer Bar. The films were baked at 121°C. for 2.5 minutes. The cured films were smooth, glossy and continuous in appearance, passed 7 methyl ethyl ketone (MEK) rubs, exhibited no blushing after 10 minutes immersion in a water bath heated at 82°C., and passed the wet adhesion test yielding a value of 100%. The wet adhesion test was conducted as follows: within one minute of removal from the water bath described above (blush resistance test), the film surface was dried with a cloth and scribed with a cross-hatch pattern. A high tack Cellophane tape was applied over the scribed portion and was removed with a jerk. (Cellophane is a Registered Trade Mark). The amount of film which remained on the panel was visually estimated—100% being no removal and 0% total removal.

Example 2

A series of blends was prepared from the aqueous solution described in Example 1—Part C and the diglycidyl ether of Bisphenol A, of Example 1 Part D and the identity of the solvent for the diglycidyl ether was varied. Thus, to 30 parts, of the solution of Example 1—Part C were added 4.4 parts of deionized water. When solution was attained, 3.1 parts of a solution of 87 parts of the diglycidyl ether of Bisphenol A in 13 parts of organic co-solvent as shown in Table I were then added with stirring. When homogeneity was attained, the blend was further diluted with 4.4 parts of deionized water. The solids content of each blend was 24.3%.

Films were then prepared from each of the blends on treated aluminum using a No. 12 Myer Bar and were baked for 2.5 minutes at 121°C. In Table I with reference to blush resistance, 10 is perfect, i.e., no blushing, and 0 is complete failure, i.e., the coatings are white and soft.

The appearance, and viscosity of the blends with the different organic solvents as a function of time are summarized in Table I as well as the properties of films prepared from each of the blends.

In the description of the blend appearance, Solution means that the blend was clear to the eye although it did exhibit the Tyndall light scattering effect. Colloidal Solution is used to describe a blend which appears somewhat hazy and opalescent. Colloidal Dispersion refers to an opaque blend exhibiting opalescence. Colloidal Solution/Dispersion describes a blend which has a degree of haziness or opaqueness between a colloidal solution and a colloidal dispersion.

Example 3

To a suitable reactor were added 1200 parts of the epoxy-amine adduct solution described in Part B of Example 1. Heat and stirring were applied raising the temperature to 60—70°C. Glacial acetic acid, 49.2 parts, (degree of salting 100%), was added rapidly and when the acid was thoroughly mixed in, deionized water, 2053.2 parts, was added slowly while maintaining the temperature at 70°C. The resulting solution had a solids content of 21.8%, a Gardner-Holdt viscosity at 25°C. of $A_3$ and a pH of 5.6.

To 50 parts of the above solution were added with stirring 4.5 parts of a solution of the diglycidyl ether of Bisphenol A, having an epoxide equivalent weight of 190, at 87% solids in ethylene glycol monobutyl ether. The mixture immediately became opaque, creamy and viscous. However, within about two minutes of continuous stirring, the mixture became translucent and then clear. The resulting microemulsion was further diluted with 6.4 parts of deionized water.

Using a No. 12 Myer Rod, films were prepared using the above microemulsion on panels of electrolytic tin plate (ETP), tin free steel (TFS), treated aluminum (TAL) and untreated aluminum (UAL).

Panels were baked for 2.5 minutes at 121°C. Additional coated panels were baked for 2.5 minutes at 177°C. The evaluation of the coatings was conducted in accordance with the tests shown in Table II and the results summarized therein. Tests 1 to 3 and 8 are conducted in accordance with Example 1.

TABLE I
Appearance

| | Organic Co-solvent | |
|---|---|---|
| Time after mixing | Mono butyl ether of ethylene glycol ($\delta_p$=3.1) | Mono ethyl ether of ethylene glycol ($\delta_p$=4.2) |
| 1 hr | Solution | Colloidal sol/disp. |
| 1 day | Solution | Sediment |
| 2 days | Colloidal solution | Much sediment |
| 7 days | Colloidal dispersion | N/D |
| | **Viscosity, Gardner-Holdt at 25°C** | |
| 1 hr | G-H | A |
| 1 day | O | E-F |
| 2 days | U | N/D |
| 7 days | $A_3$ | N/D |

N/D=Not determined.

Film Properties

| | | |
|---|---|---|
| Appearance | Smooth, glossy | Rough ridges |
| Methyl ethyl ketone rubs | 6 | 6 |
| Blush resistance | 10 | 10 |
| Wet adhesion | 100% | 100% |

TABLE I (cont.)
Appearance

| | Organic co-solvent | | |
|---|---|---|---|
| Time after mixing | Diacetone alcohol ($\delta_p$=4.0) | n-Butanol ($\delta_p$=2.8) | s-Butanol ($\delta_p$=2.8) |
| 1 hr. | Colloidal Sol/Disp. | Solution | Solution |
| 1 day | Sediment | Colloidal solution | Colloidal solution |
| 2 days | Two layers | Cloudy dispersion | Cloudy dispersion |
| 7 days | N/D | Colloidal dispersion | Colloidal dispersion |
| | **Viscosity, Gardner-Holdt at 25°C** | | |
| 1 hr | $A_1$ | K | K |
| 1 day | F | T-U | P |
| 2 days | N/D | U | T |
| 7 days | N/D | $A_3$ | $A_3$ |

N/D=Not determined

Film properties

| | | | |
|---|---|---|---|
| Appearance | Rough ridges | Smooth, glossy | Smooth, glossy |
| Methyl ethyl ketone rubs | 5 | 7 | 5 |
| Blush resistance | 10 | 10 | 10 |
| Wet adhesion | 100% | 100% | 100% |

TABLE II
Baked at 121°C

| Test No. | | ETP | TFS | TAL | UAL |
|---|---|---|---|---|---|
| 1 | MEK rubs | 4 | 4 | 4 | 4 |
| 2 | Blush resistance | 10 | 10 | 10 | 8—9 |
| 3 | Wet adhesion | 100% | 95% | 100% | 100% |
| 4 | Pencil hardness | H | 3H | 4H | 4H |
| 5 | Appearance | OK* | OK | OK | OK |
| | **Baked at 177°C** | | | | |
| 6 | MEK rubs | 29 | 22 | 22 | 37 |
| 7 | Blush resistance | 10 | 10 | 10 | 10 |
| 8 | Wet adhesion | 100% | 100% | 100% | 100% |
| 9 | Pencil hardness | H | 3H | 4H | 4H |
| 10 | Appearance | OK | OK | OK | OK |

OK* means glossy smooth coatings uninterrupted by craters, pinholes or other discontinuities.

Example 4

To a suitable reactor were added 202.73 parts of the diglycidyl ether of Bisphenol A having an epoxide equivalent weight of 190. The temperature was raised to 70°C. and, with stirring, 97.31 parts of Bisphenol A were added followed by 0.41 part of triphenyl phosphine catalyst. Heating was continued raising the temperature to 130°C. The heat source was removed, and the temperature increased to 161°C. due to the exothermic reaction. Heating was resumed raising the temperature to 180°C. in ten minutes. The temperature was held at 178—180°C. for one hour. The heat source was removed and 250 parts of toluene were slowly added while allowing the temperature to drop to 70°C. At 70°C., 64 parts of ethylene diamine were added and the temperature was held at 70°C. for one

hour. The temperature was then raised to 100°C. and was held at 100—104°C. for one hour. The reactor was then fitted for distillation and heat was applied to distil the unreacted ethylene diamine and toluene. After 45 minutes, the pot temperature had reached 182°C. Vacuum, 28.5 inches Hg., was applied and heating at 180—184°C. was continued for 15 minutes. The vacuum and heat source were removed, and with the temperature at 170°C., 88.74 parts of ethylene glycol monobutyl ether was added over a 20 minute period. At 130°C., 88.74 parts of n-butanol were added over a 30 minute period. The resulting epoxy-amine adduct solution had a solids content of 63.8%. The epoxy-amine adduct had an average molecular weight of about 2830, an amine nitrogen equivalent weight of 708 and an amine hydrogen equivalent weight of 472.

To 60 parts of the epoxy-amine adduct solution were added 3.14 parts of glacial acetic acid (degree of salting 100%) and 112.46 parts of deionized water. To 50 parts of this solution (having a pH of 5.4) were added 4.87 parts of a solution of the diglycidyl ether of Bisphenol A, having an epoxide equivalent weight of 190, at 87% solids, in ethylene glycol monobutyl ether. The mixture became opaque, creamy and viscous. However, within about two minutes of continuous stirring, the mixture became translucent and then clear. The resulting microemulsion was further diluted with 6.8 parts, by weight of deionized water to bring the solids content to 24.5%, based on the weight of the microemulsion. The Gardner-Holdt viscosity at 25°C. within 10 minutes of mixing was A and the appearance was clear. After 3 days at room temperature, the viscosity was $A_3$ and the appearance was clear. After 4 days the viscosity and appearance were the same, $A_3$ and clear.

Using a No. 12 Myer Rod, films were prepared on different metal panels of the type employed in Example 3. Two sets of panels were made in accordance with Example 2, one set being baked at 121°C. for 2.5 minutes, the other at 177°C. for 2.5 minutes. The coated panels are tested as shown in Table III with tests 1—3 and 6—5 conducted in accordance with Example 1 and the results summarized therein.

TABLE III
Baked at 121°C.

| Test No. | | ETP | TFS | TAL | UAL |
|---|---|---|---|---|---|
| 1 | MEK rubs | 14 | 11 | 14 | 14 |
| 2 | Blush resistance | 10 | 10 | 10 | 8—9 |
| 3 | Wet adhesion | 100% | 50% | 100% | 100% |
| 4 | Pencil hardness | H | 3H | 4H | 4H |
| 5 | Appearance | OK | OK | OK | OK |
| | Baked at 177°C. | | | | |
| 6 | MEK rubs | 46 | 38 | 48 | 50 |
| 7 | Blush resistance | 10 | 10 | 10 | 10 |
| 8 | Wet adhesion | 100% | 100% | 100% | 100% |
| 9 | Pencil hardness | H | 3H | 4H | 4H |
| 10 | Appearance | OK | OK | OK | OK |

Example 5

Part A

Using the same procedure as described in Example 1, Part A, 1621.6 parts of the diglycidyl ether of Bisphenol A having an epoxide equivalent weight of 190 were reacted with 778.4 parts of Bisphenol A using 3.28 parts of triphenyl phosphine as catalyst. The resulting higher molecular weight resin had an epoxide equivalent weight of 1414.

Part B

To a suitable reactor were added 600 parts of the resin described in Part A and 500 parts of toluene. Heat and stirring were applied to dissolve the resin. When solution was attained and with the temperature adjusted to 70°C., 128 parts of ethylene diamine were added. The temperature was held for 1 hour at 70°C., followed by 1 hour at 100°C. The reactor was then fitted for distillation, and the temperature was raised to 170°C., to distil the unreacted ethylene diamine and toluene. When the 170°C. temperature was reached, vacuum (28.5 inches Hg) was applied, the temperature was raised to 180°C. and was held at 180°C. for 15 minutes. The vacuum was released and the heating source was removed. Ethylene glycol monobutyl ether, 417.1 parts, was slowly added forming a 60% solids solution based on the total weight of the solution. The average molecular weight of the adduct was 2932, the amine nitrogen equivalent weight was 733 and the amine hydrogen equivalent weight was 489.

Part C

To 600 parts of the resin solution of Part B were added 58.9 parts of acetic acid (degree of salting 200%) and 992.5 parts of deionized water. The resulting solution had a solids content of 21.8% and a Gardner-Holdt viscosity at 25°C. of $A_2$. The pH was 4.6.

Part D

To 50 parts of the solution of Part C were added with stirring, 4.87 parts of a solution of the diglycidyl ether of Bisphenol A having an epoxide equivalent weight of 190, to 87% solids in ethylene glycol monobutyl ether. The mixture became opaque, creamy and viscous but cleared within 2 minutes of mixing. The microemulsion was diluted further with 6.8 parts of deionized water. The viscosity, Gardner-Holdt at 25°C., was B. After one day at room temperature, the microemulsion was clear and the viscosity was C—D. After 5 days, the microemulsion was still clear and the viscosity was L. After 13 days, the microemulsion remained clear and the viscosity was $Z_3$.

Part E

To 50 parts of the solution of Part C were added with stirring, 4.24 parts of the diglycidyl ether of Bisphenol A, having an epoxide equivalent weight of 190. The mixture became opaque, creamy and viscous. After about 5 minutes of mixing, the mixture cleared forming a microemulsion. After further dilution with 6.8 parts, by weight, of deionized water, the viscosity was A—B. After one day the viscosity was B, after five days M and after 13 days $Z_4$. The microemulsion remained clear.

Example 6

Part B of Example 5 was repeated with the same reactants and procedure except that the epoxy-amine adduct after distillation was dissolved in 104.3 parts ethylene glycol monobutyl ether, 208.5 parts n-butanol and 104.3 parts methyl ethyl ketone. To 600 parts of this solution were added 58.9 parts of glacial acetic acid (degree of salting 200%) and 992.5 parts of deionized water. The resulting solution had a Gardner-Holdt viscosity at 25°C. of $A_1$, a solids content of 21.8% and a pH of 4.6.

Microemulsions were formed using 50 parts of the above solution and, in one instance, adding thereto 4.87 parts of a solution of the diglycidyl ether of Bisphenol A, having an expoxide equivalent weight of 190, at 87% solids in ethylene glycol monobutyl ether followed by 6.8 parts of deionized water (6A). In the other instance the microemulsion (6B) was formed by adding to 50 parts of the solution described in the first paragraph of this example, 4.24 parts of the same diglycidyl ether of Bisphenol A of Part 6A but without co-solvent, followed by 6.8 parts of deionized water. Microemulsion 6A had an initial viscosity of D-E, after one day F, after 5 days T and after 13 days $Z_3$. Microemulsion 6B had an initial viscosity of E-F, after one day H, after 5 days W, and after 13 days $Z_5$. Both microemulsions remained clear.

Example 7

To a suitable reactor were added 600 parts of the higher molecular weight polyepoxide resin described in Part A of Example 5, and 500 parts of toluene. Heat and stirring were applied to dissolve the resin. When solution was attained, the temperature was adjusted to 70°C. and 128 parts of ethylene diamine were added. The temperature was held at 70°C. for one hour and then at 100°C. for 1 hour. The temperature was then raised to 70°C. to distil the toluene and unreacted ethylene diamine. The distillation was completed by vacuum distillation (28.5 inches Hg) at 170—180°C. for 15 minutes. At the end of this period, vacuum was released and molten epoxy-amine adduct resin having a weight average molecular weight of 2932, an amine nitrogen equivalent weight of 733 and an amine hydrogen equivalent weight of 489 was discharged into a suitable container.

A number of solutions were prepared at 60% solids, from 40 parts of the epoxy-amine adduct described above and 26.67 parts of various organic co-solvents as shown in Table IV. Aqueous solutions were prepared from these resin solutions by mixing 30 parts of the organic solutions with 1.47 parts of glacial acetic acid followed by 5.1 parts of deionized water. The amount of glacial acetic acid is sufficient to achieve a degree of salting of the epoxy-amine adduct of 100%. Aqueous solutions using sufficient glacial acetic acid to achieve a degree of salting of the adduct of 200% were also prepared from 30 parts of the epoxy-amine adduct solution, 2.95 parts of glacial acetic acid, and 49.62 parts of deionized water. The solution designation, solvent and degree of salting are shown at Table IV.

Each of the aqueous epoxy-amine adduct resin solutions, 30 parts, were blended with 2.92 parts of a solution of the diglycidyl ether of Bisphenol A, having an epoxide equivalent weight of 190, at 87% solids in ethylene glycol monobutyl ether by mixing vigorously until viscous and clear or for 2 minutes. Deionized water, 4.2 parts, was then added with vigorous stirring. The appearance and viscosity (Gardner-Holdt) of the blends initially and after various intervals at room temperature are shown in Table IV.

The viscosity measurements are represented by the letters not in parentheses and are Gardner-Holdt at 25°C. The designations in the parentheses represent the following: (Im)=immiscible—2 layers; (C)=a clear microemulsion which although clear to the eye gives a Tyndall light beam effect; (CS)=colloidal solution, i.e. a translucent, slightly hazy solution appearance; (CD)—colloidal dispersion

appearance, i.e., an opaque blend; (CS/CD)—a blend which has a degree of haziness and opaqueness between a colloidal solution and dispersion appearance; (D)=dispersion, i.e., very opaque system with no opalescence; (sep)=separated into two layers.

TABLE IV(a)

| Run No. | Co-solvent | $\delta_p$ $(cal/cm^3)^{1/2}$ | Degree of adduct salting % | Immediate |
|---|---|---|---|---|
| 1 | ethylene glycol monomethyl ether | 4.5 | 100 | (Im) |
| 2 | ethylene glycol monomethyl ether | 4.5 | 200 | (Im) |
| 3 | ethylene glycol monoethyl ether | 4.2 | 100 | (Im) |
| 4 | ethylene glycol monoethyl ether | 4.2 | 200 | (Im) |
| 5 | propylene glycol mono-n-propyl ether | 2.9 | 100 | (CD) L |
| 6 | propylene glycol mono-n-propyl ether | 2.9 | 200 | (CD) M |
| 7 | propylene glycol mono-n-butyl ether | 2.6 | 100 | (C) $Z_4$ |
| 8 | propylene glycol mono-n-butyl ether | 2.6 | 200 | (C) $Z_3$ |
| 9 | propylene glycol monomethyl ether | 4.1 | 100 | (Im) |
| 10 | propylene glycol monomethyl ether | 4.1 | 200 | (Im) |
| 11 | diethylene glycol monobutyl ether | 3.4 | 100 | (CS) G-H |
| 12 | diethylene glycol monobutyl ether | 3.4 | 200 | (CS) A |
| 13 | diethylene glycol monoethyl ether | 4.2 | 100 | (Im) |
| 14 | diethylene glycol monoethyl ether | 4.2 | 200 | (Im) |
| 15 | diacetone alcohol | 4.0 | 100 | (Im) |
| 16 | diacetone alcohol | 4.0 | 200 | (Im) |
| 17 | ethylene glycol monobutyl ether | 3.1 | 100 | (C) E |
| 18 | ethylene glycol monobutyl ether | 3.1 | 200 | (C) B |
| 19 | 50 parts ethylene glycol monobutyl ether | 3.1 | | |
| | 50 parts n-butanol | 2.8 | 100 | (C) U |
| 20 | 50 parts ethylene glycol monobutyl ether | 3.1 | | |
| | 50 parts n-butanol | 2.8 | 200 | (C) R |
| 21 | methyl ethyl ketone | 4.4 | 100 | (CD) F |
| 22 | methyl ethyl ketone | 4.4 | 200 | (CD) H |
| 23 | methyl n-butyl ketone | 3.0 | 100 | (CS) $A_1$ |
| 24 | methyl n-butyl ketone | 3.0 | 200 | (CS) D |

TABLE IV (continued) (b)

| Run No. | Co-solvent | 1 day | 2 days | 6 days | 7 days | 10 days |
|---|---|---|---|---|---|---|
| 1 | ethylene glycol monomethyl ether | — | — | — | — | — |
| 2 | ethylene glycol monomethyl ether | — | — | — | — | — |
| 3 | ethylene glycol monoethyl ether | — | — | — | — | — |
| 4 | ethylene glycol monoethyl ether | — | — | — | — | — |
| 5 | propylene glycol mono-n-propyl ether | (CS) X | (C) $Z_5$ | (CS) $Z_6$ | (CS) $Z_6$ | (CD) E-F |
| 6 | propylene glycol mono-n-propyl ether | (C) O | (C) T-U | (C) Z—$Z_1$ | (C) $Z_2$ | (C) $Z_5$ |
| 7 | propylene glycol mono-n-butyl ether | (CS) $Z_4$ | (CS) $Z_5$ | (CS) $Z_6$ | (CS) $Z_6$ | (CD) A |
| 8 | propylene glycol mono-n-butyl ether | (C) $Z_3$ | (C) $Z_4$ | (C) $Z_6$ | (C) $Z_6$ | (C) $Z_6$ |
| 9 | propylene glycol monomethyl ether | — | — | — | — | — |
| 10 | propylene glycol monomethyl ether | — | — | — | — | — |

TABLE IV (continued) (b)

| Run No. | Co-solvent | 1 day | 2 days | 6 days | 7 days | 10 days |
|---|---|---|---|---|---|---|
| 11 | diethylene glycol monobutyl ether | (C) J-K | (C) S | (C) $Z_3$ | (CS) $Z_3$ | (CS) $Z_3$ |
| 12 | diethylene glycol monobutyl ether | (C) A | (C) A-B | (C) C | (C) C | (C) E-F |
| 13 | diethylene glycol monoethyl ether | — | — | — | — | — |
| 14 | diethylene glycol monoethyl ether | — | — | — | — | — |
| 15 | diacetone alcohol | — | — | — | — | — |
| 16 | diacetone alcohol | — | — | — | — | — |
| 17 | ethylene glycol monobutyl ether | (C) J | (C) X | (CS) $Z_6$ | (CS) $Z_6$ | (CD) $Z_6$ |
| 18 | ethylene glycol monobutyl ether | (C) B-C | (C) E | (C) Q | (C) U | (C) Y-Z |
| 19 | 50 parts ethylene glycol monobutyl ether 50 parts n-butanol | (C) $Z_2$ | (C) $Z_6$ | (CS/CD) $Z_6$ | (CD) $Z_6$ | (D) $A_4$ |
| 20 | 50 parts ethylene glycol monobutyl ether 50 parts n-butanol | (C) T-U | (C) W-X | (C) $Z_4$—$Z_5$ | (C) $Z_5$ | (C) $Z_6$ |
| 21 | methyl ethyl ketone | (D) W | — | (D) $>Z_6$ | D | Gel |
| 22 | methyl ethyl ketone | (D) D | — | Sep | — | — |
| 23 | methyl n-butyl ketone | (CD) A-$A_1$ | — | (CD) B | Sep | — |
| 24 | methyl n-butyl ketone | (D) N | — | (Sep) | — | — |

(Im) =immiscible (2 layers).
(C) =clear microemulsion which exhibits Tyndall beam effect.
(CS) =colloidal solution, i.e., translucent slightly hazy solution appearance.
(CD) =colloidal dispersion appearance, i.e., opaque dispersion with opalescence.
(CS/CD) =blend which has a degree of haziness and opaqueness between colloidal solution and colloidal dispersion.
(D) =dispersion, i.e., very opaque with no opalescence.
(Sep) =separated into two layers.

The two-component system of the present invention may be supplied in a pack comprising a separate compartment for each component.

## Claims

1. A two-component resin coating system (which, when the components are mixed, forms a thermosetting curable coating composition having the resin of the second component present in the mixture in the microemulsified state) which comprises:

(A) as a first component, a solution of:

(1) an acid salt of a polyamine terminated polyepoxide adduct which is the reaction product of

(a) a polyepoxide resin represented by the structural formula

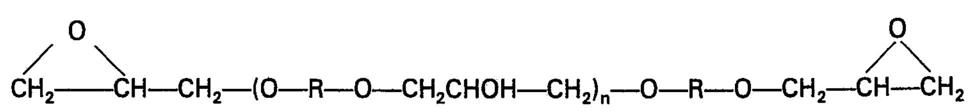

wherein R is a divalent hydrocarbon radical of a dihydric phenol and the average value of n is from 8 to 20 and

(b) a polyamine having at least two amine nitrogen atoms per molecule, at least three reactive amine hydrogen atoms per molecule and no other groups reactive with epoxide groups,

wherein about 1 mol of (b) is reacted with each epoxide equivalent (a), said adduct having an active amine hydrogen equivalent weight of 290 to 1000 and an amine nitrogen equivalent weight of 360 to 1500;

(2) at least one organic aliphatic hydroxyl containing co-solvent having a solubility parameter polar component from 2.6 to 3.9 $(cal/cm^3)^{1/2}$ present in an amount of from 5 to 45% by weight based on the weight of the polyepoxide-amine adduct and co-solvent; and

(3) water in an amount sufficient to bring the solids content of the mixture to below 40% by weight, based on the weight of adduct, co-solvent and water; and

(B) as a second component a polyepoxide cross-linker which is a glycidyl polyether of a polyhydric phenol having an epoxide equivalent weight of 150 to 500,

the first component (A) and the second component (B) being present in the amounts to achieve an epoxide group to active amine hydrogen ratio of from 0.25:1 to 1.5:1.

2. The resin coating system of claim 1 wherein R of the recurring structural formula in item (a) is a divalent radical derived from p,p'-dihydroxydiphenyl propane; the polyamine in item (b) is an alkylene polyamine having the formula:

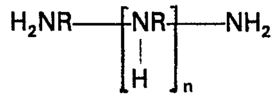

wherein n is 0, 1, 2, 3 or 4 and R is an alkylene group containing 2 to 4 carbon atoms; the organic co-solvent is an alcohol or a glycol ether, or a mixture of any thereof; and the polyepoxide cross-linker is derived from the reaction product of epichlorohydrin and p,p'-dihydroxydiphenyl propane.

3. The resin coating system of claim 1 or 2 wherein the polyepoxide cross-linker has admixed therewith at least one organic co-solvent having a solubility parameter polar component from 2.6 to 3.9 $(cal/cm^3)^{1/2}$ in an amount of from 5 to 40% by weight based on the weight of co-solvent and cross-linker.

4. The resin coating system of any of claims 1—3 wherein the co-solvent is a mixture of at least one organic co-solvent having a boiling point greater than 160°C. and at least one organic hydrocarbon co-solvent having a low boiling point less than 160°C. and wherein the weight weighted average of the solubility parameter polar components of the high and low boiling co-solvents is from 2.8 to 3.8 $(cal/cm^3)^{1/2}$.

5. The resin coating system of any of claims 1—4 wherein n of the recurring structural formula in item (a) has an average value of from 8 to 12; the polyamine in item (b) is an ethylene polyamine; the active hydrogen amine equivalent weight of the adduct is from 350 to 650; the amine nitrogen equivalent weight of the adduct is from 475 to 1000; and the co-solvent is t-butanol, n-propanol, n-butanol, ethylene glycol monopropylether, diethylene glycol monobutyl ether, ethylene glycol monobutylether, propylene glycol monopropyl ether or propylene glycol monobutyl ether or a mixture of any of these.

6. The resin coating system of any of claims 1—5 wherein the degree of salting of the polyamine terminated polyepoxide adduct is 80% to 300%.

7. The resin coating system of any of claims 1—6 wherein the acid forming the acid salt is a volatile organic acid.

8. The resin coating system of claim 7 wherein the acid is acetic acid.

9. A curable thermosetting coating composition which is an intimate admixture of a first component and a second component, these components being as defined in any of claims 1—8, in the form of a composition wherein the epoxy resin cross-linker is present in the microemulsified state, the amount of water in this composition being controlled to achieve a solids content in this composition of from 5 to 40% by weight based on the weight of the adduct, cross-linker, co-solvent and water.

10. A process for coating a substrate wherein the curable thermosetting coating composition of claim 9 is formed into a layer on the surface of the substrate and is then cured.

11. The process of claim 10 wherein the curable thermosetting coating composition is cured at a temperature of 65 to 205°C. for a period of 0.5 to 8 minutes.

**Revendications**

1. Système de revêtement en résine à deux composants (qui, quand les composants sont mélangés, forme une composition de revêtement durcissable par thermodurcissement ayant la résine du second composant présente dans le mélange à l'état microémulsifié) qui comprend:

(A) comme premier composant, une solution de:

(1) un sel d'acide d'un produit d'addition de polyépoxyde terminé en polyamine qui est le produit de réaction de:

(a) une résine de polyépoxyde représentée par la formule de structure:

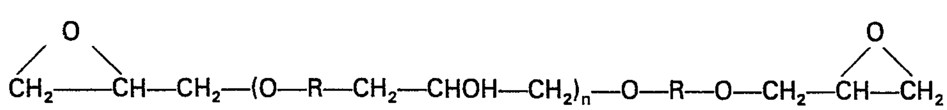

où R est un radical hydrocarbure divalent d'un phénol dihydrique et la valeur moyenne de n est comprise entre 8 et 20 et

(b) une polyamine ayant au moins deux atomes d'azote d'amine par molécule, au moins trois atomes d'hydrogère réactif d'amine par molécule et pas d'autres groupes réactifs avec les groupes époxydes,

où on fait réagir environ 1 mole de (b) avec chaque équivalent époxyde de (a), ledit produit d'addition ayant un poids équivalent d'hydrogène actif dans l'amine de 290 à 1000 et un poids équivalent d'azote dans l'amine de 360 à 1500;

(2) au moins un co-solvant contenant un hydroxyle organique aliphatique ayant un composant polaire de paramètre de solubilité de 2,6 à 3,9 $(cal/cm^3)^{1/2}$ présent en une quantité de 5 à 45% en poids en se basant sur le poids du produit d'addition polyépoxyde-amine et co-solvant; et

(3) de l'eau en une quantité suffisante pour amener la teneur en solides dans le mélange à moins de 40% en poids, en se basant sur le poids du produit d'addition, du co-solvant et de l'eau; et

(B) comme second composant, un réticulant de polyépoxyde qui est un glycidyl polyéther d'un phénol polyhydrique ayant un poids équivalent d'époxyde de 150 à 500, le premier composant (A) et le second composant (B) étant présents aux quantités pour obtenir un rapport du groupe époxyde à l'hydrogène actif de l'amine de 0,25:1 à 1,5:1.

2. Système de revêtement de résine selon la revendication 1 où R de la formule récurrente de structure à l'article (a) est un radical divalent dérivé du p,p'-dihydroxydiphényl propane; la polyamine à l'article (b) est une alcoylène polyamine ayant pour formule:

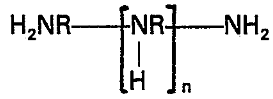

où n est 0, 1, 2, 3 ou 4 et R est un groupe alcoylène contenant de 2 à 4 atomes de carbone; le co-solvant organique est un alcool ou un glycol éther, ou un mélange d'entre eux et le réticulant de polyépoxyde est dérivé du produit réactionnel de l'épichlorohydrine et du p,p'-dihydroxydiphényl propane.

3. Système de revêtement de résine selon la revendication 1 ou 2, où le réticulant de polyépoxyde est mélangé à au moins un co-solvant organique ayant un composant polaire de paramètre de solubilité de 2,6 à 3,9 $(cal/cm^3)^{1/2}$ en une quantité de 5 à 40% en poids en se basant sur le poids du co-solvant et du réticulant.

4. Système de revêtement de résine selon l'une des revendications 1 à 3 où le co-solvant est un mélange d'au moins un co-solvant organique ayant un point d'ébullition supérieure à 160°C et au moins un co-solvant d'hydrocarbure organique ayant un faible point d'ébullition inférieur à 160°C et où la moyenne pondérée en poids des composants polaires à paramètre de solubilité des co-solvants à fort et faible points d'ébullition est de 2,8 à 3,8 $(cal/cm^3)^{1/2}$.

5. Système de revêtement de résine selon l'une des revendications 1 à 4 où n dans la formule récurrente de structure de l'article (a) a une valeur moyenne de 8 à 12; la polyamine dans l'article (b) et une éthylene polyamine; le poids équivalent d'hydrogène actif dans l'amine du produit d'addition est de 360 à 650; le poids équivalent d'azote dans l'amine du produit d'addition est de 475 à 1000; et le co-solvant est du t-butanol, du n-propanol, du n-butanol, du monopropyléther d'éthylène glycol, du monobutyl éther de diéthylène glycol, du monobutyl éther d'éthylène glycol, du monoproyl éther de propylène glycol ou du monobutyléther de propylène glycol ou bien un mélange de ceux-ci.

6. Système de revêtement de résine selon l'une des revendications 1 à 5, où le degré de salage du produit d'addition de polyépoxyde terminé en polyamine est de 80% à 300%.

7. Système de revêtement de résine selon l'une des revendications 1 à où l'acide formant le sel d'acide est un acide organique volatil.

8. Système de revêtement de résine selon la revendication 7 où l'acide est l'acide acétique.

9. Composition de revêtement thermodurcissable durcissable qui est un mélange intime d'un premier composant et d'un second composant, ces composants étant tels que définis selon l'une des revendications 1 à 8, sous forme d'une composition où le réticulant de résine époxy est présent à l'état microémulsifié, la quantité d'eau dans cette composition étant contrôlée pour obtenir une teneur en solides dans cette composition de 5 à 40% en poids en se basant sur le poids du produit d'addition, du réticulant, du co-solvant et de l'eau.

10. Procédé de revêtement d'un substrat où la composition de revêtement thermodurcissable durcissable selon la revendication 9 est formée en une couche à la surface du substrat puis est durcie.

11. Procédé selon la revendication 10 où la composition de revêtement thermodurcissable durcissable est durcie à une température de 65 à 205°C pendant 0,5 à 8 minutes.

**Patentansprüche**

1. Zweikomponenten-Harz-Beschichtungs-System (das nach dem Mischen der Komponenten

eine durch Wärmeeinwirkung härtbare Beschichtungsmasse bildet, in der das Herz der zweiten Komponente im mikroemulgierten Zustand vorliegt), enthaltend

(A) als erste Komponente eine Lösung aus
(1) einem Säuresalz eines Polyepoxid-Addukts mit endständigem Polyamin, das das Reaktionsprodukt
(a) eines Polyepoxid-Harzes, das durch die Strukturformel

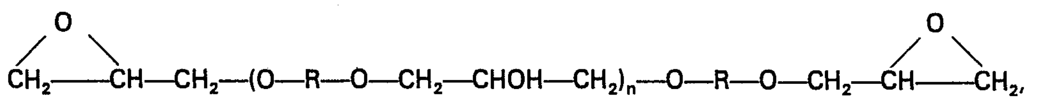

in der R ein zweiwertiger Kohlenwasserstoff-Rest eines zweiwertigen Phenols ist und der Mittelwert von n 8 bis 20 beträgt, bezeichnet ist, und
(b) eines Polyamins mit wenigstens zwei Amin-Sticksstoff-Atomen im Molekül, wenigstens drei reaktionsfähigen Amin-Wasserstoff-Atomen im Molekül sowie keinen weiteren Gruppen, die gegenüber Epoxid-Gruppen reaktionsfähig sind,
ist, worin etwa 1 mol (b) umgesetzt ist mit jeweils einem Epoxid-Äquivalent von (a), wobei das Addukt eine Äquivalentgewicht des aktiven Amin-Wasserstoffs von 290 bis 1000 und ein Äquivalentgewicht des Amin-Stickstoffs von 360 bis 1500 besitzt,
(2) wenigstens einem organischen, aliphatisches Hydroxyl enthaltenden Verschnittmittel mit einer Löslichkeitsparameter-Polarkomponente von 2,6 bis 3,9 $(cal/cm^3)^{1/2}$, das in einer Menge von 5 bis 45 Gew.-%, bezogen auf das Gewicht des Polyepoxid-Amin-Addukts und des Verschnittmittels, vorliegt, und
(3) Wasser in einer Menge, die ausreicht, um den Feststoff-Gehalt der Mischung auf einen Wert unterhalb von 40 Gew.-%, bezogen auf das Gewicht des Addukts, Verschnittmittels und Wassers, zu bringen, und
(B) als zweite Komponente ein Polyepoxid-Vernetzungsmittel, das ein Glycidylpolyether eines mehrwertigen Phenols mit einem Epoxid-Äquivalentgewicht von 150 bis 500 ist,
wobei die erste Komponente (A) und die zweite Komponente (B) in solchen Mengen vorliegen, daß ein Verhältnis der aktiven Epoxid-Gruppen zu den aktiven Amin-Wasserstoff-Atomen von 0,25:1 bis 1,5:1 erreicht wird.

2. Harz-Beschichtungs-System nach Anspruch 1, dadurch gekennzeichnet, daß R in der Repetiereinheit der Strukturformel in Punkt (a) ein zweiwertiger, von p,p'-Dihydroxydiphenylpropan abgeleiteter Rest ist, daß das Polyamin in Punkt (b) ein Alkylen-Polyamin der Formel

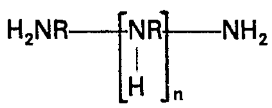

ist, in der n 0, 1, 2, 3 oder 4 ist und R eine 2 bis 4 Kohlenstoff-Atome enthaltende Akylen-Gruppe ist, daß das organische Verschnittmittel ein Alkohol oder ein Glycolether oder eine beliebige Mischung aus diesen ist und daß das Polyepoxid-Vernetzungsmittel abgeleitet ist von dem Reaktionsprodukt aus Epichlorhydrin und p,p'-Dihydroxydiphenylpropan.

3. Harz-Beschichtungs-System nach Anspruch 1 oder 2, dadurch gekennzeichnet, daß das Polyepoxid-Vernetzungsmittel wenigstens ein organisches Verschnittmittel mit einer Löslichkeitsparameter-Polarkomponente von 2,6 bis 3,9 $(cal/cm^3)^{1/2}$ in einer Menge von 5 bis 40 Gew.-%, bezogen auf das Gewicht von organischem Verschnittmittel und Vernetzungsmittel, zugemischt enthält.

4. Harz-Beschichtungs-System nach Anspruch 1 bis 3, dadurch gekennzeichnet, daß das Verschnittmittel eine Mischung aus wenigstens einem organischen Verschnittmittel mit einem Siedepunkt oberhalb von 160°C und wenigstens einem organischen Kohlenwasserstoff-Verschnittmittel mit einem niedrigen Siedepunkt unterhalb von 160°C ist und daß der über das Gewicht gewichtete Mittelwert der Löslichkeitsparameter-Polarkomponenten des hochsiedenen und des niedrigsiedenden Verschnittmittels von 2,8 bis 3,8 $(cal/cm^3)^{1/2}$ beträgt.

5. Harz-Beschichtungs-System nach Anspruch 1 bis 4, dadurch gekennzeichnet, daß n der Repetiereinheit der Strukturformel in Punkt (a) einen Mittelwert von 8 bis 12 besitzt, daß das Polyamin in Punkt (b) ein Ethylen-Polyamin ist, daß das Äquivalentgewicht des aktiven Amin-Wasserstoffs 350 bis 650 beträgt und das Äquivalentgewicht des Amin-Stickstoffs von 475 bis 1000 beträgt und daß das Verschnittmittel t-Butanol, N-Propanol, n-Butanol, Ethylenglycol-monopropylether, Diethylenglycol-monobutylether, Ethylenglycol-monobutylether, Propylenglycol-monopropylether oder Propylenglycolmonobutylether oder eine beliebige Mischung aus diesen ist.

6. Harz-Beschichtungs-System nach Anspruch 1 bis 5, dadurch gekennzeichnet, daß der Salzbildungsrad des Polyepoxid-Addukts mit endständigem Polyamin 80% bis 300% beträgt.

7. Harz-Beschichtungs-System nach Anspruch 1 bis 6, dadurch gekennzeichnet, daß die das Säuresalz bildende Säure eine flüchtige organische Säure ist.

8. Harz-Beschichtungs-System nach Anspruch 7, dadurch gekennzeichnet, daß die Säure Essigsäure ist.

9. Durch Wärmeeinwirkung härtbare Beschichtungsmasse, die eine innige Mischung aus einer ersten und einer zweiten Komponente ist, wobei diese Komponenten in den Ansprüchen 1 bis 8 definiert sind, in Form einer Zusammensetzung, in der das Epoxy-Harz-Vernetzungsmittel im mikroemulgierten Zustand vorliegt, wobei die Wasser-Menge in dieser Zusammensetzung so gesteuert wird, daß ein Feststoff-Gehalt in dieser Zusammensetzung von 5 bis 40 Gew.-%, bezogen auf das Gewicht des Addukts, Vernetzungsmittels, Verschnittmittels und Wassers, erreicht wird.

10. Verfahren zur Beschichtung eines Substrats, dadurch gekennzeichnet, daß die durch Wärmeeinwirkung härtbare Beschichtungsmasse nach Anspruch 9 in Form einer Schicht auf die Oberfläche des Substrats aufgebracht und danach gehärtet wird.

11. Verfahren nach Anspruch 10, dadurch gekennzeichnet, daß die durch Wärmeeinwirkung härtbare Beschichtungsmasse bei einer Temperatur von 65°C bis 205°C während einer Zeitspanne von 0,5 bis 8 min gehärtet wird.